# EUROPÄISCHE PATENTSCHRIFT

(11) **EP 1 601 731 B1**
(45) Veröffentlichungstag und Bekanntmachung des Hinweises auf die Patenterteilung: **28.01.2015**
(21) Anmeldenummer: 04716236.7
(22) Anmeldetag: 02.03.2004
(51) Int. Cl.: C09D 183/04, E03C 1/00

(54) **BESCHICHTUNGSVERFAHREN FÜR SANITÄRGEGENSTÄNDE**
COATING METHOD FOR PLUMBING ARTICLES
PROCEDE DE REVETEMENT D'ARTICLES SANITAIRES

(30) Priorität: 06.03.2003 DE 10311001
(43) Veröffentlichungstag der Anmeldung: 07.12.2005
(73) Patentinhaber: Hansgrohe SE, 77761 Schiltach (DE)
(72) Erfinder: WAIDELE, Armin, 72275 Alpirsbach (DE)
(74) Vertreter: Patentanwälte Ruff, Wilhelm, Beier, Dauster & Partner
(86) Internationale Anmeldenummer: PCT/EP2004/002055
(87) Internationale Veröffentlichungsnummer: WO 2004/078865

(56) Entgegenhaltungen:
- EP-A- 0 309 349
- EP-A- 0 669 385
- EP-A- 1 127 930
- DE-A- 10 102 739
- US-B1- 6 395 826
- US-B1- 6 403 164

## Beschreibung

Die Erfindung betrifft ein Verfahren zur Beschichtung von Sanitärgegenständen wie Sanitärarmaturen sowie die mit diesem Verfahren herstellbaren Sanitärgegenstände.

Bekanntlich stellen Sanitärgegenstände für ihre bestimmungsgemäße Verwendung insbesondere in Bad und Küche sowohl in funktioneller Hinsicht als auch in dekorativer Hinsicht besonders hohe Anforderungen. So müssen Sanitärgegenstände, um nur einige der technischen Anforderungen zu nennen, in hohem Maße korrosionsbeständig sein, leicht zu reinigen sein und kratzbeständig sein. Gleichzeitig müssen die Sanitärgegenstände den dekorativen Ansprüchen genügen, die vom Kunden gerade auch in Bad und Küche gefordert werden.

Die geschilderte Problematik betrifft insbesondere auch Edelstahlprodukte und Produkte, die eine sogenannte Edelstahloptik aufweisen. So werden im Sanitärbereich beispielsweise Armaturen aus Edelstahl gefertigt und Brausen, Verbindungsteile und Accessoires in Edelstahloptik hergestellt Diese Edelstahloptik kann beispielsweise auf einem Grundkörper aus Kunststoff durch Beschichtung mit bestimmten Metallen oder Metallegierungen, die ein edelmetallähnliches Aussehen ergeben, erreicht werden. Sowohl bei massiven Gegenständen aus Edelstahl als auch bei Gegenständen mit Edelstahloptik kommt der Edelstahlcharakter durch eine mechanisch behandelte Oberfläche erst richtig zur Geltung. Die mechanische Behandlung kann dabei vorzugsweise durch Bürsten erfolgen.

Das ursprüngliche Erscheinungsbild von Edelstahlprodukten oder Produkten mit Edelstahloptik erlebt allerdings durch den täglichen Gebrauch eine unerwünschte Verwandlung. Die Oberfläche verliert an Glanz und wird fleckig. Finger- und Handabdrücke sind häufig nicht mehr vollständig zu entfernen, da insbesondere in den Bürstrillen bzw. -riefen sitzender aggressiver Handschweiß dort zu partieller Korrosion führt. Die dabei entstehenden Abbauprodukte sind ohne Beschädigung der Oberfläche kaum mehr zu entfernen. Anhaftende Fett-, Nahrungs- und Kalkrückstände sind aufgrund der Oberflächenstrukturierung nur noch so schwer zu beseitigen, daß die ursprüngliche überzeugende Oberfläche kaum mehr erkennbar ist.

Im Stand der Technik wurde bisher versucht, die geschilderten Probleme durch einen herkömmlichen Lackierprozeß zu lösen. Dabei werden transparente Schutzlacke, wie Acryllacke, Epoxylacke, Polyurethanlacke oder Polysiloxanlacke auf gereinigte Oberflächen aufgesprüht und, meist durch einen Temperprozeß, vernetzt. Dementsprechend wird die gesamte Oberfläche des Sanitärgegenstands mit dem Schutzlack beschichtet. Ein derartiges Verfahren ist beispielsweise in der EP-A-1127930 beschrieben. Dies ist jedoch mit einigen Nachteilen verbunden. So tritt die eigentliche Oberfläche (Edelstahl, Edelstahloptik) gegenüber dem Betrachter nicht mehr direkt in Erscheinung. Weiter werden die technischen Eigenschaften, wie Korrosionsbeständigkeit, Kratzbeständigkeit, Abriebbeständigkeit und dergleichen nicht mehr durch die metallische Oberfläche, sondern durch die Schutzlackschicht bestimmt. Schließlich besteht immer die Gefahr eines Abplatzens der Schutzlackschicht, da diese über die gesamte Oberfläche vorhanden ist und dementsprechend für Beschädigungen eine große Angriffsfläche bietet.

Die Erfindung stellt sich die Aufgabe, die geschilderten Nachteile des Standes der Technik zu vermeiden. Dabei soll insbesondere ein verbessertes Verfahren bereitgestellt werden, mit dem das ursprüngliche Erscheinungsbild von Sanitärgegenständen aus Edelstahl oder mit Edelstahloptik erhalten werden kann. Die entsprechenden Sanitärgegenstände sollen in besonderem Maße schmutzunempfindlich, Fingerprint-unempfindlich, reinigungsmittelbeständig und leicht zu reinigen sein.

Diese Aufgabe wird gelöst durch das Verfahren mit den Merkmalen des Anspruchs 1 und durch den Sanitärgegenstand mit den Merkmalen des Anspruchs 11. Bevorzugte Ausführungen dieses Verfahrens und dieses Gegenstands sind in den abhängigen Ansprüchen 2 bis 10 bzw. 12 bis 15 dargestellt. Der Wortlaut sämtlicher Ansprüche wird hiermit durch Bezugnahme zum Inhalt dieser Beschreibung gemacht.

Mit dem erfindungsgemäßen Verfahren werden Sanitärgegenstände wie Sanitärarmaturen beschichtet, die Edelstahloberflächen oder Oberflächen mit einer sogenannten Edelstahloptik aufweisen. Dabei wird auf mindestens einen Teil der Oberflächen mindestens ein Siloxan aufgebracht, und zwar derart, daß nur die Vertiefungen, Rillen, Riefen und dergleichen, die in den Oberflächen vorhanden sind, mit dem Siloxan ohne Polymerisation beschichtet oder verfüllt werden. Dies bedeutet mit anderen Worten, daß außerhalb der Vertiefungen und dergleichen auf den Oberflächen kein Siloxan vorhanden ist. Dies unterscheidet die Erfindung vom Stand der Technik, bei dem über die gesamten Oberflächen eine geschlossene Schutzlackschicht, aufgebracht wird. Dem gegenüber sind bei der Erfindung im wesentlichen nur die Vertiefungen und dergleichen mit dem Siloxan beschichtet oder mit dem Siloxan ausgefüllt.

Bei dem erfindungsgemäßen Verfahren ist es bevorzugt, wenn es sich bei den zu beschichtenden Oberflächen um solche handelt, die mechanisch (oberflächen-)behandelt sind. Wie eingangs erwähnt, tritt bei solchen Oberflächen der Edelstahlcharakter, insbesondere dessen optisches Erscheinungsbild, erst richtig hervor. Die mechanische Oberflächenbehandlung kann dabei beispielsweise durch Schleifen, z. B. mit einem geeigneten Schleifpapier, erfolgen. Eine andere Möglichkeit der Oberflächenbearbeitung ist das sogenannte Strahlen. Hierunter versteht der Fachmann bekanntlich eine mechanische Oberflächenbehandlung, bei der beispielsweise (Quarz-)Sand oder Glasperlen als Strahlmittel (Durchmesser üblicherweise 0,5 bis 1,5 mm) mit Hilfe von Druckluftgebläsen auf die entsprechende Oberfläche geschleudert werden. Hierbei entstehen die für das Strahlen charakteristischen Oberflächenstrukturen mit den entsprechenden Vertiefungen.

Eine besonders bevorzugte Art der Oberflächenbehandlung ist das sogenannte Bürsten. Dabei wird erfindungsgemäß die Oberfläche mit einer Bürste oder einem gleichwirkenden Bearbeitungsmittel ausreichender. Festigkeit und Härte unter teilweisern Abtrag der Oberfläche bearbeitet. Durch diesen Vorgang werden in die Oberfläche die charakteristischen Strukturen wie Vertiefungen, Rillen, Riefen und dergleichen eingearbeitet, wie sie für eine solche, dem Fachmann bekannte Bearbeitung mit Bürsten charakteristisch sind.

Erfindungsgemäß können bei der Erfindung das Bürsten, das Strahlen und gegebenenfalls andere Oberflächenbearbeitungen alternativ oder in Kombination angewendet werden. Bevorzugt wird mindestens ein Teil der später zu beschichtenden Oberfläche gebürstet, wobei dann insbesondere die Teile der Oberflächen, die mit der Bürste/Bürstscheibe nur schwer erreicht und bearbeitet werden können, gestrahlt werden.

Bei einer ersten Gruppe von erfindungsgemäß bevorzugten Ausführungsformen wird das Siloxan auf Edelstahloberflächen aufgebracht. Dabei kann es sich grundsätzlich um Edelstahloberflächen handeln, die als Beschichtung auf einen Grundkörper aus einem anderen Metall oder aus Kunststoff aufgebracht sind. Hervorzuheben sind jedoch die Fälle, bei denen der Sanitärgegenstand selbst aus (massivem) Edelstahl gefertigt ist. Dann wird das Siloxan direkt auf diesen Edelstahlgegenstand aufgebracht.

Bei einer zweiten Gruppe von bevorzugten Ausführungsformen wird das Siloxan auf Oberflächen mit Edelstahloptik aufgebracht. Wie bereits eingangs erläutert, handelt es sich hier um Oberflächen, die nicht aus Edelstahl bestehen, jedoch das Aussehen (die Optik) von Edelstahl besitzen. Insbesondere handelt es sich hierbei um Metallbeschichtungen, die auf einen Grundkörper aus einem anderen Metall oder aus Kunststoff aufgebracht sind. Besonders hervorzuhebende Metallbeschichtungen mit Edelstahloptik sind dabei Nickel-Wolfram-Schichten und/oder Palladium-Nickel-Schichten. Beschichtungen aus solchen Legierungen sind dem Fachmann grundsätzlich bekannt. Die Edelstahloptik, und in diesen Fällen auch edelstahlähnliche technische Eigenschaften wie Korrosionsbeständigkeit und dergleichen, werden dadurch erreicht, daß auf metallische Grundkörper oder Grundkörper aus Kunststoff oberste Schichten aus diesen Legierungen aufgebracht werden. Sofern in diesen Fällen auch die Optik von oberflächenbehandeltem, insbesondere gebürstetem Edelstahl erreicht werden soll, so werden häufig Schichten aus anderen Metallen wie Kupfer oder Nickel, die sich unterhalb der Nickel-Wolfram- bzw. Palladium-Nickel-Schichten befinden, gebürstet. Die Bürststruktur bleibt dann bei Aufbringen der dünnen Deckschichten aus den genannten Legierungen erhalten.
Das erfindungsgemäß verwendete Siloxan unterscheidet sich von den bereits bekannten Polysiloxan-Schutzlacken dadurch, daß im Gegensatz zum Stand der Technik keine vollständige Vernetzung/Polymerisation stattfindet. Das gegebenenfalls oligomer vorliegende Siloxan wird nicht durch thermische Nachbehandlung in ein Polysiloxan überführt. Vorzugsweise wird das Siloxan als sogenanntes Sol-Gel-System eingesetzt, wobei sich bei den Ausgangsmaterialien bekanntlich um hydrolysierbare anorganische Verbindungen handelt. Besonders verbreitet sind hier Alkoxide von Titan, Aluminium, Zirkonium und Silizium. Diese Verbindungen werden in einem ersten Reaktionsschritt hydrolysiert (Umsetzung mit Wasser in Gegenwart von Katalysatoren). Diese Hydrolyse führt zu einem reaktivem Zwischenprodukt, dem sogenannten Sol. In diesem Sol liegen die hydrolysierten Verbindungen als kolloidale Teilchen vor. Das Sol kann dann als Beschichtungssystem dienen. Wie bereits erwähnt, findet allerdings bei der Erfindung im Vergleich zum Stand der Technik im wesentlichen keine anschließende gezielte Kondensationsreaktion zu polymeren Verbindungen, beispielsweise durch Anwendung höherer Temperaturen (Tempern) statt.

Das erfindungsgemäß verwendete Siloxan liegt vorzugsweise als wäßrige und/oder alkoholische Suspension oder Lösung vor. Ein bevorzugtes alkoholisches Lösungsmittel ist dabei Ethanol. Ganz allgemein beträgt der Gehalt an Siloxan in der entsprechenden Lösung oder Suspension mehr als 10 Gew.-%, wobei Gehalte zwischen 30 Gew.-% und 60 Gew.-% weiter bevorzugt sind. In der Lösung oder Suspension ist das (gegebenenfalls oligomere) Siloxan durch das Lösungsmittel vor (weiterer) Polymerisation geschützt. Das Siloxan härtet dann durch Verdunstung des Lösungsmittels aus, eine chemische (Vernetzungs-)Reaktion findet dabei, wenn überhaupt, nur in geringem Maße statt. Nach Verdunsten des Lösungsmittels ist das Siloxan chemisch resistent und kann nicht wieder, beispielsweise durch Ethanol, in eine Lösung oder Suspension zurückgeführt werden.
Grundsätzlich können erfindungsgemäß die unterschiedlichsten Siloxane eingesetzt werden. Vorzugsweise handelt es sich dabei um sogenannte cyclische Siloxane, wobei innerhalb dieser Gruppe das Siloxan Octamethylcyclotetrasiloxan hervorgehoben werden soll.

Vorzugsweise wird bei dem erfindungsgemäßen Verfahren so vorgegangen, daß das Siloxan auf die entsprechenden Oberflächen aufgebracht und auf diesen verteilt wird. Dadurch kann das Siloxan in die vorhandenen Vertiefungen, Rillen, Riefen und dergleichen eindringen und diese verfüllen bzw. die dort vorhandenen Oberflächen beschichten. Zur Unterstützung dieses Vorgangs kann ein gezieltes Andrücken, beispielsweise mit einer entsprechenden Einrichtung oder einem Tuch erfolgen. Ein solches Tuch kann auch zum Aufbringen selbst bereits verwendet werden. Man kann in diesem Zusammenhang auch davon sprechen, daß die entsprechenden Oberflächen mit dem Siloxan eingerieben werden. Von Vorteil ist dabei natürlich, wenn es sich bei dem Tuch um ein im wesentlichen fusselfreies Tuch handelt. Hier sind insbesondere die sogenannten Mikrofasertücher zu nennen, wie sie auch im Haushalt Verwendung finden.

Es versteht sich, daß erfindungsgemäß die zu beschichtende Oberfläche vor dem Aufbringen des Siloxans gereinigt werden kann, um Schmutz, Fusseln und dergleichen aus den Vertiefungen, Rillen, Riefen usw. zu entfernen. Zweckmäßigerweise sollte anschließend das Reinigungsmittel vollständig entfernt und die Oberfläche getrocknet werden.

Die erfindungsgemäßen Sanitärgegenstände, die Edelstahloberflächen oder Oberflächen mit einer Edelstahloptik aufweisen, sind dadurch gekennzeichnet, daß nur die Vertiefungen, Rillen, Riefen und dergleichen, die in diesen Oberflächen vorhanden sind, mit mindestens einem Siloxan ohne Polymerisation beschichtet oder verfüllt sind. Auf die im Zusammenhang mit dem erfindungsgemäßen Verfahren gemachten Ausführungen wird hiermit ausdrücklich Bezug genommen und verwiesen.

Die Edelstahloberflächen oder Oberflächen mit Edelstahloptik weisen dabei vorzugsweise die Struktur einer mechanischen Oberflächenbehandlung auf. Hierbei kann es sich beispielsweise um die Oberflächenstruktur handeln, die bei einem Strahlen, insbesondere Sandstrahlen, entsteht. Vorzugsweise weisen die erfindungsgemäß beschichteten Sanitärgegenstände eine sogenannte Bürststruktur, wie sie oben bereits erläutert wurde, auf.

Bei einer ersten Gruppe von bevorzugten Ausführungsformen sind die erfindungsgemäßen Sanitärgegenstände mit Edelstahl beschichtet oder insbesondere aus Edelstahl gefertigt Bei einer zweiten Gruppe bevorzugter Ausführungsformen wird die Edelstahloptik dadurch erreicht, daß die erfindungsgemäßen Sanitärgegenstände mit einer Nickel-Wolfram-Beschichtung oder einer Palladium-Nickel-Beschichtung versehen sind. Auch hier wird auf die Ausführungen zum erfindungsgemäßen Verfahren ausdrücklich Bezug genommen und verwiesen.

Das Siloxan, das sich bei den erfindungsgemäßen Sanitärgegenständen als Beschichtung oder Verfüllung in den vorhandenen Vertiefungen, Rillen, Riefen und dergleichen befindet, ist vorzugsweise ein oligomeres Siloxanprodukt. Es handelt sich nicht um ein vernetztes oder auspolymerisiertes Polysiloxan wie bei den Schutzschichten, wie sie aus dem Stand der Technik bekannt sind. Vorzugsweise handelt es sich bei dem Siloxan um ein sogenanntes cyclisches Siloxan, insbesondere um Octamethylcyclotetrasiloxan.

Das beschriebene erfindungsgemäße Verfahren und die damit herstellbaren beschriebenen Sanitärgegenstände weisen gegenüber dem Stand der Technik entscheidende Vorteile auf. So läßt sich das Verfahren einfach durch eine entsprechende Behandlung der zu beschichtenden Oberflächen durchführen. Eine Vernetzung, beispielsweise durch Wärmebehandlung wie bei den bisher angewendeten Schutzlacken ist nicht erforderlich. Aufgrund der Tatsache, daß sich das nicht auspolymerisierte Siloxan im wesentlichen nur in den Vertiefungen und dergleichen, die in der Oberfläche vorhanden oder eingebracht sind, befindet, bleibt die eigentliche Edelstahloberfläche oder Oberfläche mit Steeloptik für den Betrachter/Kunden sichtbar. Darüber hinaus werden die Eigenschaften der Oberfläche nicht ausschließlich vom Beschichtungsmaterial bestimmt wie beim Stand der Technik. Eigenschaften wie Korrosionsbeständigkeit, Kratzbeständigkeit und Abriebbeständigkeit werden weitgehend vom eigentlichen Oberflächenmaterial (Substrat) bestimmt. Aufgrund der Tatsache, daß sich das Siloxan nur innerhalb der Vertiefungen und dergleichen befindet, bietet die Beschichtung im Gegensatz zu den Schutzlackbeschichtungen des Standes der Technik für einen, beispielsweise mechanischen Angriff von außen nur eine vergleichsweise geringe Angriffsfläche. Damit wird ein Ablösen oder Abplatzen der Beschichtung, wie es beim Stand der Technik häufig auftritt, wirksam verhindert.

Die genannten und weitere Merkmale der Erfindung ergeben sich aus der Beschreibung des nun folgenden Beispiels in Verbindung mit den Ansprüchen. Dabei können die einzelnen Merkmale jeweils für sich allein oder in Kombination miteinander verwirklicht sein.

### Beispiel

Zur erfindungsgemäßen Beschichtung von Sanitärgegenständen werden der Grundkörper eines sogenannten Einhebelmischers (ohne Kopf- und Bedienteil) aus Edelstahl sowie zwei Grundkörper einer Brause aus dem Kunststoffmaterial ABS (Acrylnitril-Butadien-Styrol-Copolymer) bereitgestellt.

Die Edelstahloberfläche der Sanitärarmatur (Einhebelmischer) ist gebürstet und zeigt das charakteristische Erscheinungsbild eines solchen gebürsteten Edelstahlprodukts. Die Kunststoff-Grundkörper der Brausen aus ABS sind mit verschiedenen Metallschichten beschichtet. So befindet sich auf dem Kunststoffteil zunächst eine Kupferschicht und darüber eine sogenannte Sulfamatnickelschicht (Nickel matt), die galvanisch aufgebracht wurden. Die so erhaltene Nickeloberfläche ist gebürstet. Oberhalb der gebürsteten Nickelschicht befindet sich bei einer Brause eine Palladium-Nickel-Schicht und bei der anderen Brause eine Nickel-Wolfram-Schicht. Auf diese Weise zeigen beiden Brausen eine sogenannte Edelstahloptik, die derjenigen einer gebürsteten Edelstahloberfläche entspricht.

Die so bereitgestellten drei Grundkörper (Einhebelmischer, Brausen) werden in üblicher Weise gereinigt und anschließend getrocknet. Dann wird eine Lösung von Octamethylcyclotetrasiloxan in Ethanol (30 %ig) auf die Oberflächen der drei Grundkörper aufgesprüht und mit Hilfe eines handelsüblichen Mikrofasertuches verteilt und eingerieben. Auf diese Weise werden die durch das Bürsten entstandenen Strukturen wie Vertiefungen, Rillen, Riefen und dergleichen mit dem Siloxan beschichtet und verfüllt. Es findet keine (vollständige) Polymerisation des Siloxans zu einem Polysiloxan statt. Dementsprechend bildet sich auf den Oberflächen auch keine geschlossene Schutzlackschicht, die sowohl die Vertiefungen als auch die zwischen den Vertiefungen liegenden Oberflächenbereiche bedecken würde.

Die Funktionalität der erfindungsgemäß erhaltenen Beschichtungen wird auf verschiedene Weise getestet. So zeigen Versuche, daß die beschichteten Oberflächen im Vergleich zu unbeschichteten Oberflächen gegen Fingerabdrücke (Fingerprint) unempfindlich sind. Werden die erfindungsgemäß beschichteten Gegenstände mit kalkhaltigem Wasser begossen, so bilden sich nach dem Eintrocknen entweder überhaupt keine oder deutlich weniger Kalkflecken im Vergleich zu unbeschichteten Gegenständen. Die erfindungsgemäß beschichteten Gegenstände sind auch beständig gegen handelsübliche Reinigungsmittel wie Fliesenreiniger. Schließlich zeigen Versuche, daß Wassertropfen auf den beschichteten Gegenständen wesentlich leichter ablaufen als von unbeschichteten Gegenständen. Damit sind auch die sogenannten Abperleigenschaften durch die Erfindung wesentlich verbessert.

## Patentansprüche

1. Verfahren zur Beschichtung von Sanitärgegenständen wie Sanitärarmaturen, die Edelstahloberflächen oder Oberflächen mit einer sogenannten Edelstahloptik aufweisen, bei dem mindestens ein Siloxan auf mindestens einen Teil der Oberflächen aufgebracht wird, derart, daß nur die in den Oberflächen vorhandenen Vertiefungen, Rillen, Riefen und dergleichen mit dem Siloxan ohne Polymerisation beschichtet oder verfüllt werden.

2. Verfahren nach Anspruch 1, **dadurch gekennzeichnet, daß** die Oberflächen vor dem Aufbringen des Siloxans mechanisch behandelt, vorzugsweise gebürstet werden.

3. Verfahren nach Anspruch 1 oder Anspruch 2, **dadurch gekennzeichnet, daß** es sich bei den Oberflächen um Edelstahloberflächen, insbesondere eines aus Edelstahl gefertigten Sanitärgegenstands handelt.

4. Verfahren nach Anspruch 1 oder Anspruch 2, **dadurch gekennzeichnet, daß** es sich bei den Oberflächen um Nickel-Wolfram-Oberflächen oder Palladium-Nickel-Oberflächen handelt, wobei vorzugsweise diese Oberflächen als Beschichtungen auf einen metallischen Grundkörper oder einen Grundkörper aus Kunststoff aufgebracht sind.

5. Verfahren nach einem der vorhergehenden Ansprüche, dadurch gekenntzeichnet, daß das Siloxan als sogenanntes Sol-Gel-System auf die Oberflächen aufgebracht wird.

6. Verfahren nach einem der vorhergehenden Ansprüche, **dadurch gekennzeichnet, daß** das Siloxan in Form einer wäßrigen oder alkoholischen Lösung auf die Oberflächen aufgebracht wird.

7. Verfahren nach Anspruch 6, **dadurch gekennzeichnet, daß** der Siloxan-Gehalt der Lösung mindestens 10 Gew.-%, vorzugsweise 30 bis 60 Gew.-% beträgt.

8. Verfahren nach einem der vorhergehenden Ansprüche, **dadurch gekennzeichnet, daß** es sich bei dem Siloxan um ein cyclisches Siloxan, vorzugsweise um Octamethylcyclotetrasiloxan handelt.

9. Verfahren nach einem der vorhergehenden Ansprüche, **dadurch gekennzeichnet, daß** das Siloxan auf die Oberflächen aufgebracht und dort, gegebenenfalls unter mechanischem Andrücken, über die Oberflächen verteilt wird.

10. Verfahren nach einem der vorhergehenden Ansprüche, **dadurch gekennzeichnet, daß** das Aufbringen und gegebenenfalls Verteilen des Siloxans mit Hilfe eines Tuches, insbesondere eines sogenannten Mikrofaseriuches erfolgt.

11. Sanitärgegenstand, der Edelstahloberflächen oder Oberflächen mit einer sogenannten Edelstahloptik aufweist, **dadurch gekennzeichnet, daß** nur die in den Oberflächen vorhandenen Vertiefungen, Rillen, Riefen und dergleichen mit mindestens einem Siloxan ohne Polymerisation beschichtet oder verfüllt sind.

12. Sanitärgegenstand nach Anspruch 11, **dadurch gekennzeichnet, daß** die Oberflächen mindestens teilweise mechanisch behandelt, vorzugsweise gebürstet sind.

13. Sanitärgegenstand nach Anspruch 11 oder Anspruch 12, **dadurch gekennzeichnet, daß** es sich bei den Oberflächen um Edelstahloberflächen, insbesondere eines aus Edelstahl gefertigten Sanitärgegenstands handelt.

14. Sanitärgegenstand nach Anspruch 11 oder 12, **dadurch gekennzeichnet, daß** es sich bei den Oberflächen um Nickel-Wolfram-Oberflächen oder Palladium-Nickel-Oberflächen handelt, wobei vorzugsweise diese Oberflächen als Beschichtungen auf einem metallischen Grundkörper oder einem Grundkörper aus Kunststoff vorliegen.

15. Sanitärgegenstand nach einem der Ansprüche 11 bis 14, **dadurch gekennzeichnet, daß** es sich bei dem Siloxan um ein cyclisches Siloxan, insbesondere um Octamethylcyclotetrasiloxan handelt.

## Claims

1. A method for coating plumbing articles, such as plumbing fixtures, which have stainless steel surfaces or surfaces having a so-called stainless steel appearance, in which at least one siloxane is applied to at least a part of the surfaces in such a way that only recesses, channels, grooves and the like present in the surfaces are coated or filled with the siloxane without polymerization.

2. The method according to claim 1, **characterized in that** the surfaces are mechanically treated, preferably brushed, before the application of the siloxane.

3. The method according to claim 1 or claim 2, **characterized in that** the surfaces are stainless steel surfaces, in particular of a plumbing article produced from stainless steel.

4. The method according to claim 1 or claim 2, **characterized in that** the surfaces are nickel-tungsten surfaces or palladium-nickel surfaces, these surfaces preferably having been applied as coatings to a metallic base body or a base body made of synthetic material.

5. The method according to any one of the preceding claims, **characterized in that** the siloxane is applied as a so-called sol-gel system to the surfaces.

6. The method according to any one of the preceding claims, **characterized in that** the siloxane is applied in the form of an aqueous or alcoholic solution to the surfaces.

7. The method according to claim 6, **characterized in that** the siloxane content of the solution is at least 10 % by weight, preferably from 30 to 60 % by weight.

8. The method according to any one of the preceding claims, **characterized in that** the siloxane is a cyclic siloxane, preferably octamethylcyclotetrasiloxane.

9. The method according to any one of the preceding claims, **characterized in that** the siloxane is applied to the surfaces and is distributed there over the surfaces, optionally with mechanical pressing.

10. The method according to any one of the preceding claims, **characterized in that** the application and optionally distribution of the siloxane are effected with the aid of a cloth, in particular a so-called microfiber cloth.

11. A plumbing article which has stainless steel surfaces or surfaces having a so-called stainless steel appearance, **characterized in that** only recesses, channels, grooves and the like present in the surfaces are coated or filled with at least one siloxane without polymerization.

12. The plumbing article according to claim 11, **characterized in that** the surfaces are at least partly mechanically treated, preferably brushed.

13. The plumbing article according to claim 11 or claim 12, **characterized in that** the surfaces are stainless steel surfaces, in particular of a plumbing article produced from stainless steel.

14. The plumbing article according to claim 11 or 12, **characterized in that** the surfaces are nickel-tungsten surfaces or palladium-nickel surfaces, these surfaces preferably being present as coatings on a metallic base body or a base body made of synthetic material.

15. The plumbing article according to any one of the Claims 11 to 14, **characterized in that** the siloxane is a cyclic siloxane, in particular octamethylcyclotetrasiloxane.

## Revendications

1. Procédé de revêtement d'articles sanitaires tels que des robinetteries sanitaires, qui présentent des surfaces en acier inoxydable ou des surfaces ayant un aspect dit acier inoxydable, selon lequel au moins un siloxane est appliqué sur au moins une partie des surfaces, de sorte que seuls les creux, les rainures, les stries et analogues présents dans les surfaces soient revêtus ou remplis avec le siloxane sans polymérisation.

2. Procédé selon la revendication 1, **caractérisé en ce que** les surfaces sont traitées mécaniquement, de préférence brossées, avant l'application du siloxane.

3. Procédé selon la revendication 1 ou la revendication 2, **caractérisé en ce que** les surfaces sont des surfaces en acier inoxydable, notamment d'un article sanitaire fabriqué en acier inoxydable.

4. Procédé selon la revendication 1 ou la revendication 2, **caractérisé en ce que** les surfaces sont des surfaces en nickel-tungstène ou des surfaces en palladium-nickel, ces surfaces étant de préférence appliquées sous la forme de revêtements sur un corps de base métallique ou un corps de base en plastique.

5. Procédé selon l'une quelconque des revendications précédentes, **caractérisé en ce que** le siloxane est appliqué sur les surfaces sous la forme d'un système dit sol-gel.

6. Procédé selon l'une quelconque des revendications précédentes, **caractérisé en ce que** le siloxane est appliqué sur les surfaces sous la forme d'une solution aqueuse ou alcoolique.

7. Procédé selon la revendication 6, **caractérisé en ce que** la teneur en siloxane de la solution est d'au moins 10 % en poids, de préférence de 30 à 60 % en poids.

8. Procédé selon l'une quelconque des revendications précédentes, **caractérisé en ce que** le siloxane est un siloxane cyclique, de préférence l'octaméthylcyclotétrasiloxane.

9. Procédé selon l'une quelconque des revendications précédentes, **caractérisé en ce que** le siloxane est appliqué sur les surfaces et réparti sur les surfaces, éventuellement sous une pression mécanique.

10. Procédé selon l'une quelconque des revendications précédentes, **caractérisé en ce que** l'application et éventuellement la répartition du siloxane ont lieu à l'aide d'un tissu, notamment d'un tissu dit microfibre.

11. Article sanitaire, qui présente des surfaces en acier inoxydable ou des surfaces ayant un aspect dit acier inoxydable, **caractérisé en ce que** seuls les creux, les rainures, les stries et analogues présents dans les surfaces sont revêtus ou remplis avec au moins un siloxane sans polymérisation.

12. Article sanitaire selon la revendication 11, **caractérisé en ce que** les surfaces sont traitées mécaniquement, de préférence brossées, au moins en partie.

13. Article sanitaire selon la revendication 11 ou la revendication 12, **caractérisé en ce que** les surfaces sont des surfaces en acier inoxydable, notamment d'un article sanitaire fabriqué en acier inoxydable.

14. Article sanitaire selon la revendication 11 ou 12, **caractérisé en ce que** les surfaces sont des surfaces en nickel-tungstène ou des surfaces en palladium-nickel, ces surfaces étant de préférence appliquées sous la forme de revêtements sur un corps de base métallique ou un corps de base en plastique.

15. Article sanitaire selon l'une quelconque des revendications 11 à 14, **caractérisé en ce que** le siloxane est un siloxane cyclique, notamment l'octaméthylcyclotétrasiloxane.
